(19) Europäisches Patentamt
European Patent Office
Office européen des brevets

(11) **EP 4 315 591 B1**

(12) **FASCICULE DE BREVET EUROPEEN**

(45) Date de publication et mention de la délivrance du brevet:
**19.08.2026 Bulletin 2026/34**

(21) Numéro de dépôt: **22711175.4**

(22) Date de dépôt: **18.02.2022**

(51) Classification Internationale des Brevets (IPC):
***H02P 27/04*** *(2016.01)*

(52) Classification Coopérative des Brevets (CPC):
**H02P 27/04;** Y02T 10/64

(86) Numéro de dépôt international:
**PCT/EP2022/054155**

(87) Numéro de publication internationale:
**WO 2022/199957 (29.09.2022 Gazette 2022/39)**

(54) **COMPOSANT ÉLECTRONIQUE DE COMMANDE D'UN ONDULEUR/REDRESSEUR**

ELEKTRONISCHES BAUTEIL ZUR STEUERUNG EINES WECHSELRICHTERS/GLEICHRICHTERS

ELECTRONIC COMPONENT FOR CONTROLLING AN INVERTER/RECTIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2021 FR 2102896**

(43) Date de publication de la demande:
**07.02.2024 Bulletin 2024/06**

(73) Titulaire: **Valeo Electrification**
**95800 Cergy (FR)**

(72) Inventeurs:
- **FRATILA, Radu**
**94046 CRETEIL CEDEX (FR)**
- **MAZARIN, Mathieu**
**94046 CRETEIL CEDEX (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**EP-A1- 3 361 624**
**JP-A- 2013 090 551**
**US-A1- 2010 012 408**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 315 591 B1

## Description

La présente invention concerne un composant électronique de commande d'un onduleur/redresseur apte à être électriquement connecté à l'enroulement électrique de stator d'une machine élec-trique tournante, cette machine électrique tournante ayant un rotor à aimants permanents. L'invention est par exemple intégrée à un véhicule, par exemple une automobile ou toute autre forme de mobilité à propulsion hybride ou électrique, et la machine électrique tournante fournit une propulsion électrique ou hybride pour ce véhicule.

L'onduleur/redresseur peut, dans cette application, être interposé entre l'enroulement électrique de stator de la machine et le réseau de bord du véhicule. Il est connu d'appliquer à l'onduleur/redresseur une première commande étant une commande par modulation de largeur d'impulsion, et d'appliquer à ce même onduleur/redresseur une deuxième commande étant une commande pleine onde pour des vitesses de rotation plus élevées de la machine, comme divulgué par exemple dans les demandes JP 2013 090551 A et US2010/0072925. On connaît également par la demande US 2010/012408 A1 un contrôle en MLI dépendant de la température. EP 3 361 624 A1 porte sur un procédé de commande d'une machine électrique tournante coopérant avec une boîte de vitesses de véhicule automobile, au cours d'une phase de synchronisation entre deux rapports de vitesse pendant laquelle la machine électrique tournante est pilotée en vitesse et change de type de modulation pour passer d'une modulation de type pleine onde (PO) vers une modulation de largeur d'impulsion (MLI).

L'emploi de ces deux commandes successives permet d'améliorer le rendement de la machine puisque :

- une commande MLI produit un signal sinusoïdal et permet de contrôler la tension aux bornes de l'enroulement électrique de stator à des vitesses basses, et
- une commande pleine onde utilise dans des hautes vitesses toute la tension disponible, en réduisant les pertes de commutation puisque la fréquence de commutation est alors la fréquence électrique de la machine électrique et puisque le courant de phase est moins important dans cette commande pleine onde.

Il est connu que la vitesse de base $n_{MLI-PO}$ de la machine, en deçà de laquelle la première commande est appliquée et au-delà de laquelle la deuxième commande est appliquée, soit fixe sur toute la plage de fonctionnement de la machine. Cette vitesse de base est par exemple déterminée comme suit :

$$\text{[Math 1] } n_{MLI-PO} = \frac{V_{DC} * \frac{\alpha}{\sqrt{2}}}{k_e(T_0, n_0)} * n_0$$

où :

- $V_{DC}$ est la valeur nominale de la tension sur la sortie continue de l'onduleur/redresseur,
- $\alpha$ est le facteur de modulation de la tension dans la commande pleine onde, étant par exemple compris entre 1,05 et 1,103,
- $n_0$ est une vitesse de rotation de la machine électrique prédéfinie, par exemple 1000 tr/min d'autres valeurs étant possibles,
- $k_e(T_0,n_0)$ est la tension à vide entre phases (ou force électromotrice) mesurée à la vitesse $n_0$ et pour une température de refroidissement prédéfinie $T_0$, cette température $T_0$ étant par exemple égale à 70°C.

La tension à vide entre phases peut être obtenue à l'aide de l'équation suivante dans le cas où la machine électrique tournante présente un rotor à aimants permanents :

$$\text{[Math 2] } k_e(T_0, n_0) = 2\pi * p * \frac{n_0}{60} * \Psi_{ap}(T_0)$$

où :

- p est le nombre de paires de pôles du rotor de la machine électrique, et
- $\Psi_{ap}(T_0)$ est le flux généré par les aimants permanents du rotor à la température $T_0$.

Le choix d'une valeur fixe pour la vitesse de base présente des avantages en termes de simplicité. Néanmoins, une telle valeur fixe peut être trop rigide compte-tenu des performances changeantes de la machine en fonction de son utilisation.

Il existe un besoin pour améliorer encore le rendement d'une machine électrique tournante, notamment de rotor

à aimants permanents, alimentée par un onduleur/redresseur commandé sélectivement par une commande par modulation de largeur d'impulsion et par une commande pleine onde.

L'invention est divulguée par les revendications indépendantes 1 et 11, et a pour but de répondre à ce besoin et elle y parvient, selon l'un de ses aspects à l'aide d'un composant électronique de commande d'un onduleur/redresseur apte à être électriquement connecté à l'enroulement électrique de stator d'une machine électrique tournante, cette machine électrique tournante ayant notamment un rotor à aimants permanents, notamment pour un véhicule, le composant étant configuré pour appliquer sélectivement à cet onduleur/redresseur :

- une première commande étant une commande par modulation de largeur d'impulsion, et
- une deuxième commande étant une commande pleine onde,

le composant électronique étant encore configuré pour :

- recevoir une information représentative de la température des aimants permanents du rotor et/ou une information représentative de la valeur de la tension sur la sortie continue de l'onduleur/redresseur et/ou une information représentative de la valeur d'au moins une tension sur la sortie alternative de l'onduleur/redresseur,
- déterminer la valeur d'une vitesse de base pour le passage entre la première commande et la deuxième commande en fonction de l'une au moins de l'information représentative de la température des aimants permanents du rotor et/ou de l'information représentative de la valeur de la tension sur la sortie continue de l'onduleur/redresseur et/ou de l'information représentative de la valeur de la tension sur la sortie alternative de l'onduleur/redresseur, et
- appliquer l'une de la deuxième commande et de la première commande à la place de l'autre de la première commande et de la deuxième commande lorsque la valeur de la vitesse de base ainsi déterminée est atteinte.

L'invention permet d'adapter la valeur de la vitesse de base pour le passage entre la commande par modulation de largeur d'impulsions et la commande pleine onde en fonction de la valeur de la tension sur la sortie continue de l'onduleur/redresseur et/ou en fonction de la valeur de la température des aimants permanents du rotor et/ou en fonction de la valeur de la tension sur la sortie alternative de l'onduleur/redresseur.

Lorsque la détermination de la valeur de la vitesse de base est fonction au moins de l'information représentative de la température des aimants permanents du rotor, on tient ainsi compte de la variation de la température des aimants permanents, variation qui peut significativement impacter la valeur de la tension à vide entre phases. On peut ainsi déterminer une valeur de vitesse de base pour chaque valeur de température des aimants permanents. On évite d'utiliser une valeur de vitesse de base non adaptée compte-tenu de la température des aimants permanents. La valeur de vitesse de base déterminée et utilisée pour le passage de la première commande à la deuxième commande peut augmenter lorsque la température des aimants permanents augmente. Cette augmentation de la valeur de la vitesse de base avec cette augmentation de température peut éviter le passage à une commande pleine onde à faible charge, ce qui imposerait un surfluxage de la machine électrique pour compenser la baisse de flux magnétique généré par les aimants permanents lorsque leur température devient élevée. Par ailleurs, lorsque la température des aimants permanents est basse, il est possible de prolonger l'emploi de la commande par modulation de largeur d'impulsion.

L'information représentative de la température des aimants permanents peut se rapporter à un aimant seulement de l'ensemble des aimants permanents, ou à plusieurs de ces aimants permanents, ou à l'ensemble de ces aimants permanents, étant par exemple une valeur moyenne mesurée ou estimée, comme on le verra par la suite.

Selon l'invention:

- le composant électronique peut recevoir une information représentative de la température des aimants permanents du rotor et une information représentative de la valeur de la tension sur la sortie continue de l'onduleur/redresseur, et
- le composant électronique peut déterminer la valeur de la vitesse de base pour le passage entre la première commande et la deuxième commande en fonction de cette information représentative de la température des aimants permanents du rotor et de cette information représentative de la valeur de la tension sur la sortie continue de l'onduleur/redresseur.

Au sens de la présente demande :

- « axialement » signifie « parallèlement à l'axe de rotation de l'arbre »,
- « radialement » signifie « dans un plan perpendiculaire à l'axe de rotation de l'arbre et le long d'une droite coupant cet axe de rotation »,
- « circonférentiellement » signifie « dans un plan perpendiculaire à l'axe de rotation de l'arbre et en se déplaçant autour de cet axe ».

Le composant électronique peut être un circuit de traitement numérique, mettant en œuvre des portes logiques, des compteurs et une mémoire. Le composant électronique est par exemple un circuit intégré de type ASIC (« Application-specific integrated circuit » en anglais).

Le composant électronique peut être configuré pour déterminer la valeur de la vitesse de base pour le passage entre la première commande et la deuxième commande à l'aide de l'équation suivante :

$$\text{[Math 3]}\ n_{MLI-PO}(\mathrm{T_i}) = \frac{v_{DC} * \frac{\alpha}{\sqrt{2}}}{k_e(T_\mathrm{i}, n_0)} * n_0$$

$$\text{[Math 4]}\ k_e(T_i, n_0) = k_e(T_0, n_0)[1 + \beta(T_i - T_0)]$$

β étant une constante de flux magnétique des aimants permanents au rotor en fonction de la température, et $v_{DC}$ étant la valeur de la tension sur la sortie continue de l'onduleur/redresseur.

Dans tout ce qui précède, la température de refroidissement fixée $T_0$ peut être comprise entre 50°C et 100°C, étant par exemple égale à 70°C, et la vitesse de rotation prédéfinie $n_0$ peut être comprise entre 800 tr/min et 1200 tr/min, étant par exemple égale à 1000 tr/min.

β peut prendre des valeurs différentes en fonction des types d'aimants utilisés, par exemple selon qu'il s'agisse de ferrites ou de terres rares. $\beta$ varie par exemple entre -0.2%/°C et -0.03%/°C

La valeur de la vitesse de base ainsi déterminée peut être utilisée non seulement pour le passage de la première commande à la deuxième commande, lorsque la vitesse de rotation de la machine électrique augmente, mais également pour le passage de la deuxième commande à la première commande, lorsque la vitesse de rotation diminue.

En variante, la vitesse de base utilisée pour le passage de la première commande à la deuxième commande, lorsque la vitesse de rotation de la machine électrique augmente, encore appelée « première vitesse de base », diffère de la vitesse de base utilisée pour le passage de la deuxième commande à la première commande, lorsque la vitesse de rotation diminue, encore appelée « deuxième vitesse de base ». On introduit ainsi une hystérésis entre la montée de vitesse et la descente de vitesse, ce qui peut permettre d'éviter d'avoir à changer de mode de commande de manière intempestive.

Seule l'une de ces vitesses de base, par exemple la première vitesse de base, peut être déterminée en fonction de l'une au moins de l'information représentative de la température des aimants permanents du rotor et de l'information représentative de la valeur de la tension sur la sortie continue de l'onduleur/redresseur, comme expliqué ci-dessus, tandis que l'autre de ces vitesses de base, par exemple la deuxième vitesse de base, peut être déterminée différemment. La deuxième, respectivement première, vitesse de base est par exemple déterminée en retranchant ou en ajoutant, pour chaque valeur obtenue tel que décrit ci-dessus pour la première, respectivement deuxième, vitesse de base, une valeur qui peut rester fixe ou varier sur la plage de fonctionnement de la machine électrique.

Le cas échéant, le composant électronique peut être configuré pour appliquer une phase de surmodulation lors du passage de la première commande à la deuxième commande et/ou lors du passage de la deuxième commande à la première commande.

Dans tout ce qui précède, et en variante de ce qui vient d'être décrit :

- le composant électronique peut recevoir une information représentative de la valeur de la tension sur la sortie continue de **l'onduleur/redresseur** et une information représentative de la valeur d'au moins une tension sur la sortie alternative de **l'onduleur/redresseur,** et
- le composant électronique peut déterminer la valeur d'une vitesse de base pour le passage entre la première commande et la deuxième commande en fonction de cette information représentative de la valeur de la tension sur la sortie continue de **l'onduleur/redresseur** et de cette information représentative de la valeur de la tension sur la sortie alternative de **l'onduleur/redresseur.**

Lorsque le stator de la machine électrique tournante présente un enroulement électrique polyphasé, cette tension sur la sortie alternative de **l'onduleur/redresseur** peut être une tension entre phases.

Selon cette variante, la valeur de la vitesse de base peut être déterminée comme suit, par adaptation de ce qui a été exposé précédemment :

$$\text{[Math 3bis]}\ n_{MLI-PO}(\mathrm{U_i}) = \frac{v_{DC} * \frac{\alpha}{\sqrt{2}}}{k_e(U_\mathrm{i}, n_0)} * n_0$$

$$[\text{Math 4bis}]\ k_e(U_i, n_0) = k_e(U_0, n_0)[1 + \gamma(U_i - U_0)]$$

La machine électrique tournante peut avoir une tension nominale d'alimentation de 48V. En variante, cette machine électrique tournante peut avoir une tension nominale d'alimentation supérieure à 300V.

Le rotor peut être dépourvu d'enroulement électrique d'excitation. Le rotor peut être formé par un paquet de tôles à l'intérieur duquel sont disposés les aimants permanents.

Dans tout ce qui précède, **l'enroulement** électrique de stator peut être polyphasé. Indépendamment de son nombre de phases, **l'enroulement** électrique de stator peut être formé par des fils ou par des barres conductrices reliées les unes les autres. Chaque encoche de la carcasse de stator peut recevoir plusieurs conducteurs, par exemple 2, 4 ou 6.

Dans tout ce qui précède, la machine électrique tournante peut comprendre un circuit de refroidissement du stator dans lequel circule du fluide tel que de **l'air** ou du liquide. Ce liquide peut être de l'eau ou de l'huile.

Le rotor peut être refroidi par ce même circuit de refroidissement ou par un autre circuit de refroidissement dans lequel circule de l'air, ou du liquide tel que de l'eau ou de l'huile.

Dans tout ce qui précède, le rotor peut comprendre un nombre de paires de pôles quelconque, par exemple trois, quatre, six, ou huit paires de pôles.

La machine électrique tournante peut présenter une puissance électrique nominale de 4 kW, 8 kW, 15 kW, 25 kW ou plus.

L'invention a encore pour objet, selon un autre de ses aspects, un ensemble de propulsion d'un véhicule électrique ou hybride, comprenant :

- une machine électrique tournante, comprenant un stator et un rotor à aimants permanents,
- un onduleur/redresseur connecté électriquement à l'enroulement électrique de stator et apte à être connecté au réseau de bord du véhicule, et
- le composant électronique tel que défini ci-dessus.

L'ensemble de propulsion peut comprendre au moins un capteur de température permettant de fournir l'information représentative de la température des aimants au composant électronique. Il y a par exemple autant de capteurs de température qu'il y a d'aimants, ou il y a un nombre de capteurs inférieur au nombre d'aimants. Une moyenne peut être établie sur la base de ces capteurs de température et cette moyenne peut constituer l'information représentative pouvant être utilisée par le composant pour déterminer la valeur de la vitesse de base.

En variante, l'ensemble peut comprendre un estimateur de la température d'au moins un aimant permanent, voire de plusieurs aimants permanents, voire de tous les aimants permanents, et cet estimateur fournit au composant électronique l'information représentative de la température des aimants pour déterminer la valeur de la vitesse de base. L'estimateur peut recevoir comme donnée d'entrée la température mesurée pour un autre composant de la machine électrique tournante, par exemple une température dans l'enroulement électrique de stator ou une température du fluide de refroidissement.

L'information représentative de la valeur de la tension sur la sortie continue de l'onduleur/redresseur peut être une mesure de tension.

Le réseau de bord du véhicule comprend par exemple deux sous-réseaux entre lesquels est interposé un système de commutation définissant un convertisseur de tension continu/continu.

L'un de l'onduleur/redresseur et du convertisseur de tension continu/continu peut mettre en œuvre des interrupteurs électroniques commandables, tels que des transistors en nitrure de galium (GaN), en carbure de silicium (SiC), ou en silicium.

Le premier sous-réseau électrique, étant celui apte à être connecté à l'onduleur/redresseur, présente par exemple une tension nominale de 48V ou une tension nominale de valeur supérieure à 300V, et le deuxième sous-réseau électrique présente par exemple une tension nominale de 12V.

Le premier sous-réseau peut présenter une batterie et une unité de stockage d'énergie électrique formée par un ou plusieurs condensateurs et disposée en parallèle de la sortie continue de l'onduleur/redresseur. La capacité de cette unité de stockage d'énergie électrique est notamment comprise entre 2000 $\mu$F et 4000$\mu$F, par exemple de l'ordre de 3000$\mu$F.

L'invention a encore pour objet, selon un autre de ses aspects, un groupe motopropulseur de véhicule hybride ou électrique, comprenant :

- l'ensemble défini ci-dessus, et
- une boîte de vitesses, comprenant des pignons, définissant des rapports de boîte, et
- un essieu avant et un essieu arrière,

l'arbre de la machine électrique tournante étant solidaire en rotation :

- d'un arbre d'entrée de la boîte de vitesses, ou
- de l'arbre de sortie de la boîte de vitesses, ou
- de pignons fous de la boîte de vitesses, ou
- de l'essieu avant ou de l'essieu arrière.

En variante, l'arbre de la machine électrique peut être solidaire en rotation du vilebrequin du moteur thermique du véhicule, lorsque le groupe motopropulseur comprend un tel moteur thermique. Dans un tel cas, la machine électrique tournante peut comprendre une poulie ou tout autre moyen de liaison vers le reste du groupe motopropulseur du véhicule. La machine électrique est par exemple reliée, notamment via une courroie, au vilebrequin du moteur thermique du véhicule.

Le groupe motopropulseur peut comprendre un double embrayage, à sec ou humide, chacun des arbres de sortie du double embrayage formant alors un arbre d'entrée pour la boîte de vitesses.

L'invention a encore pour objet, selon un autre de ses aspects, un procédé de commande d'un onduleur/redresseur électriquement connecté à l'enroulement électrique de stator d'une machine électrique tournante ayant un rotor à aimants permanents, notamment pour un véhicule, cette commande comprenant:

- une première commande étant une commande par modulation de largeur d'impulsion, et
- une deuxième commande étant une commande pleine onde,

procédé comprenant les étapes suivantes:

- recevoir une information représentative de la température des aimants permanents du rotor et/ou une information représentative de la valeur de la tension sur la sortie continue de l'onduleur/redresseur et/ou une information représentative de la valeur d'au moins une tension sur la sortie alternative de l'onduleur/redresseur,
- déterminer la valeur d'une vitesse de base pour le passage entre la première commande et la deuxième commande en fonction de l'une au moins de l'information représentative de la température des aimants permanents du rotor et/ou de l'information représentative de la valeur de la tension sur la sortie continue de l'onduleur/redresseur et/ou de l'information représentative de la valeur de la tension sur la sortie alternative de l'onduleur/redresseur, et
- appliquer l'une de la deuxième commande et de la première commande à la place de l'autre de la première commande et de la deuxième commande lorsque la valeur de la vitesse de base est atteinte.

Tout ou partie de ce qui précède s'applique encore à cet autre aspect de l'invention.

L'invention pourra être mieux comprise à la lecture de la description qui va suivre d'exemples non limitatifs de celle-ci et à l'examen du dessin annexé sur lequel :

- la figure 1 représente de façon schématique et partiel un groupe motopropulseur auquel peut s'appliquer un exemple de mise en œuvre de l'invention,
- la figure 2 représente de façon schématique un exemple de machine électrique tournante du système de la figure 1, baignant dans l'huile,
- la figure 3 représente de façon isolée un exemple de rotor de la machine électrique tournante de la figure 2,
- la figure 4 représente de façon schématique, le circuit électrique de la machine électrique tournante du groupe motopropulseur des figures 1 et 2,
- la figure 5 est un graphe représentant l'évolution de la vitesse de base lors du passage de la première commande à la deuxième commande lors de la mise en œuvre d'un exemple selon l'invention, et
- la figure 6 est un graphe représentant plusieurs caractéristiques couple-vitesse d'une machine électrique tournante pour plusieurs vitesses de base différentes déterminées selon l'exemple de la figure 5 pour le passage de la première commande à la deuxième commande.

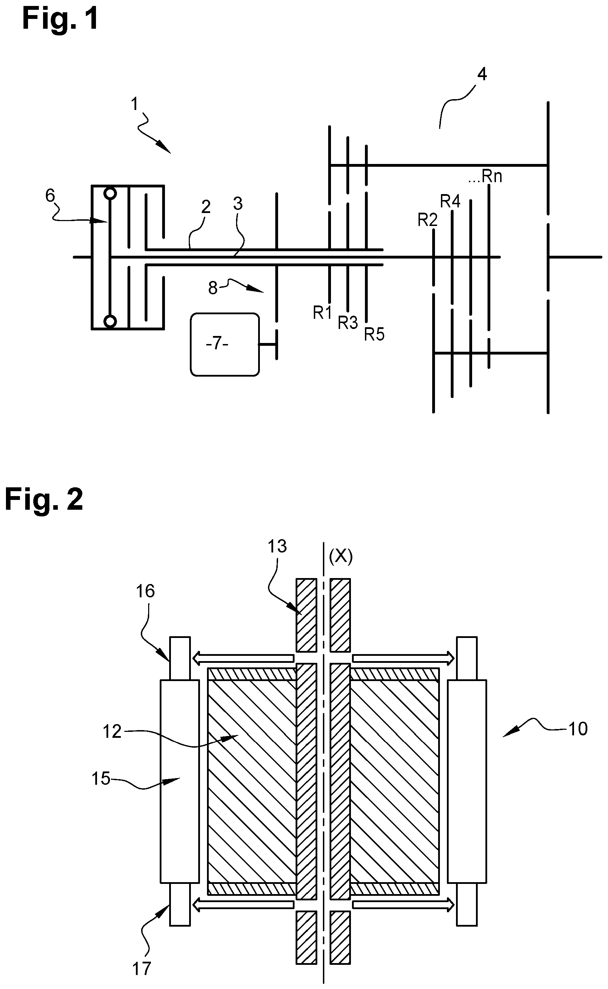

On a représenté sur la figure 1 un groupe motopropulseur 1 auquel peut s'appliquer l'invention. Le groupe motopropulseur 1 comprend ici un double embrayage 6 pouvant être à sec ou humide, à disques ou à lamelles.

Ce double embrayage présente deux arbres de sortie 2 et 3 qui sont ici concentriques. Chacun de ces arbres définit un arbre d'entrée de boîte de vitesses 4. La boite de vitesses 4 comprend, à l'intérieur d'un carter rempli d'huile, une pluralité de pignons définissant une pluralité de rapports de vitesse R1-Rn. L'arbre 2 est ici associé à des rapports de vitesse impairs et l'arbre 3 est associé à des rapports de vitesse pairs.

Le couple en sortie de la boîte de vitesses 4 est transmis aux roues du véhicule, afin d'assurer une propulsion de ce véhicule.

Le groupe motopropulseur 1 est hybride ou électrique, comprenant une machine élec-trique tournante 7 Cette machine tournante 7 est implantée à l'intérieur du carter de la boîte de vitesses 4. Dans l'exemple considéré, l'arbre de la machine tournante 7 est apte à coopérer par engrènement avec un pignon 8 solidaire de l'arbre 2 d'entrée de la boîte de vitesses associé aux rapports de vitesse impairs, mais d'autres positions sont possibles pour la machine électrique tournante 7, par exemple son engrènement avec un pignon solidaire de l'arbre 3 d'entrée de la boîte de vitesses associé aux rapports de vitesse pairs. Des emplacements de la machine électrique tournante 7 en dehors du carter de la boîte de vitesses 4 sont par ailleurs possibles.

Cette machine électrique tournante 7 peut former une source de propulsion électrique du véhicule. La machine électrique tournante 7 comporte un carter non représenté sur la figure 2. A l'intérieur de ce carter, elle comporte, en outre, un arbre 13, un rotor 12 solidaire en rotation de l'arbre 13, et un stator 10 entourant le rotor 12. Le mouvement de rotation du rotor 12 se fait autour d'un axe X. La machine électrique tournante 7 est ici une machine synchrone.

Bien que non représenté, le carter peut comporter un palier avant et un palier arrière qui sont assemblés ensemble, et peuvent chacun avoir une forme creuse et porter centralement un roulement à billes respectif pour le montage à rotation de l'arbre 13.

Dans cet exemple de réalisation, le stator 10 comporte une carcasse 15 en forme d'un paquet de tôles doté d'encoches, par exemple du type semi fermée ou ouverte, équipées d'isolant d'encoches pour le montage de l'enroulement électrique polyphasé du stator. Chaque phase comporte un enroulement traversant les encoches de la carcasse 15 et formant, avec toutes les phases, un chignon avant 16 et un chignon arrière 17 de part et d'autre de la carcasse 15 du stator. Les enroulements sont par exemple obtenus à partir d'un fil continu recouvert d'émail ou à partir d'éléments conducteurs en forme de barre tels que des épingles reliées entre elles. Chaque encoche peut recevoir plusieurs conducteurs, par exemple 2 ou 4 ou 6 conducteurs.

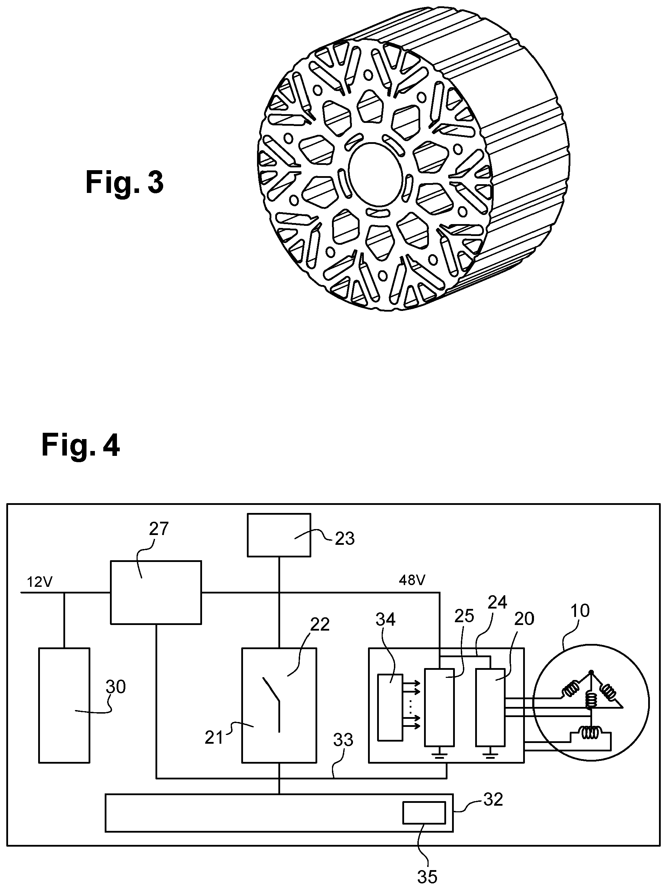

L'enroulement électrique du stator définit ici un double système triphasé, un seul de ces systèmes étant représenté sur la figure 4, chacun de ces systèmes triphasés mettant alors en œuvre un montage en étoile ou en triangle dont les sorties sont reliées à un onduleur/redresseur 20. En variante, l'enroulement électrique du stator peut définir un unique système triphasé.

Le rotor 12 de la figure 2 est formé par un empilement de tôles, comme représenté sur la figure 3. Le nombre de paires de pôles défini par le rotor 12 peut être quelconque, par exemple être compris entre trois et huit, étant par exemple égal à trois, quatre, six ou huit. Le rotor 12 peut recevoir une pluralité d'aimants permanents non représentés sur ces figures 2 et 3 mais reçus dans des logements ménagés dans l'empilement de tôles.

On constate encore sur la figure 2 que l'arbre 13 est creux, de l'huile circulant à travers celui-ci. Des ouvertures ménagées dans l'arbre 13 et visibles sur la figure 2 permettent la projection radiale d'huile dans la machine, de sorte que le rotor et le stator baignent dans l'huile, dans l'exemple considéré.

La machine peut encore comprendre des capteurs de mesure de la position du rotor, non représentés sur la figure 2. Ces capteurs sont par exemple trois capteurs à effet Hall interagissant avec une cible magnétique solidaire en rotation du rotor, mais d'autres capteurs sont possibles tels que des résolveurs. La machine peut encore comprendre des capteurs de température de tout ou partie des aimants du rotor 12 mais d'autres moyens de détermination de la température de ces aimants permanents sont possibles, tel qu'un estimateur.

L'enroulement électrique de stator de la machine électrique tournante 7 appartient à un circuit électrique comprenant l'onduleur/redresseur 20. Cet onduleur/redresseur 20 est interposé entre l'enroulement électrique du stator et un premier sous-réseau du réseau de bord du véhicule dont la tension nominale est dans l'exemple décrit égale à 48V. L'onduleur/redresseur 20 comprend par exemple plusieurs bras de commutation, chaque bras mettant en œuvre deux transistors montés en série et séparés par un point milieu. Chaque transistor est par exemple un transistor en nitrure de galium (GaN), en carbure de silicium (SiC), ou en silicium.

Le premier sous-réseau du réseau de bord comprend également dans l'exemple décrit une batterie 21 reliée au reste de ce premier sous-réseau par un interrupteur de déconnexion 22. Le premier sous-réseau peut encore comprendre ou non un ou plusieurs consommateurs 23, dont par exemple, mais de façon non limitative, un compresseur électrique de suralimentation.

Aux bornes de la sortie continue 24 de l'onduleur/redresseur 20, dont la tension est mesurée dans l'exemple considéré, est disposée dans l'exemple décrit une unité de stockage d'énergie électrique 25, qui est par exemple formée par un condensateur ou par l'assemblage de plusieurs condensateurs. Cette unité de stockage d'énergie électrique 25 a par exemple une capacité comprise entre 3000μF et 4000μF.

Le circuit électrique comprend également dans l'exemple considéré un convertisseur de tension continu/continu 27 interposé entre le premier sous-réseau et un deuxième sous-réseau du réseau de bord. Similairement à l'onduleur/redresseur 20, le convertisseur de tension continu/continu comprend par exemple des transistors qui peuvent être du même type que ceux mentionnés précédemment. Le deuxième sous-réseau du réseau de bord présente par exemple une tension nominale de 12V.

De façon connue, ce deuxième sous- réseau peut comprendre une batterie 30 ainsi que des consommateurs non représentés, pouvant être choisi(s) dans la liste suivante non limitative: système d'éclairage, système de direction

assistée électrique, système de freinage, système de climatisation ou système d'autoradio.

Le circuit électrique comprend encore dans **l'exemple** considéré une unité de contrôle 32, qui peut être le calculateur central du véhicule ou être dédiée à tout ou partie du groupe motopropulseur 1. Cette unité de contrôle 32 communique via un réseau de données 33, qui est par exemple de type CAN, avec différents composants du circuit électrique, comme on peut le voir sur la figure 4.

L'unité de contrôle 32 peut recevoir un composant électronique 35 qui va maintenant être décrit. Le composant électronique 35 est par exemple un ASIC. L'invention n'est cependant pas limitée au cas où le composant électronique 35 est intégré à l'unité de contrôle 32. Dans l'exemple décrit, le composant électronique 35 reçoit une information représentative de la température des aimants permanents du rotor et une information représentative de la valeur de tension sur la sortie continue 24 de l'onduleur/redresseur 20.

Le composant électronique 35 est configuré pour appliquer sélectivement à l'onduleur/redresseur 20 une première commande qui est une commande par modulation de largeur d'impulsion et une deuxième commande qui est une commande pleine onde. La fréquence de la commande par modulation de largeur d'impulsion est par exemple comprise entre 5 kHz et 20 kHz.

Dans **l'exemple** qui va maintenant être décrit, le composant électronique 35 applique pour le passage de la première commande à la deuxième commande, lorsque la vitesse de rotation de la machine électrique augmente, une première vitesse de base $n_{MLI\text{-}PO}(T_i)$ dont la valeur est déterminée comme suit, pour une valeur $T_i$ de température des aimants permanents du rotor :

$$\text{[Math 5]}\ n_{MLI-PO}(\mathrm{T_i}) = \frac{v_{DC}*\frac{\alpha}{\sqrt{2}}}{k_e(T_\mathrm{i},n_0)} * n_0$$

$$\text{[Math 6]}\ k_e(T_i,n_0) = k_e(T_0,n_0)[1+\beta(T_i - T_0)]$$

La deuxième vitesse de base, pour le passage de la deuxième commande à la première commande, peut être déterminée par le composant électronique 35 en retranchant une valeur fixe sur toute la plage de fonctionnement de la machine à la valeur déterminée ci-dessus pour la première vitesse de base. Cette valeur fixe est par exemple égale à 500 tr/min.

Dans un exemple particulier, la vitesse $n_0$ ci-dessus est choisie comme égale à 1000 tr/min, la température $T_0$ est choisie comme étant égale à 70°C, $\alpha$ est choisie comme étant égal à 1.05, $\beta$ est choisi comme étant égale à -0.01/°C et $k_e(T_0,n_0)$ est choisie comme étant égale à 8.6V.

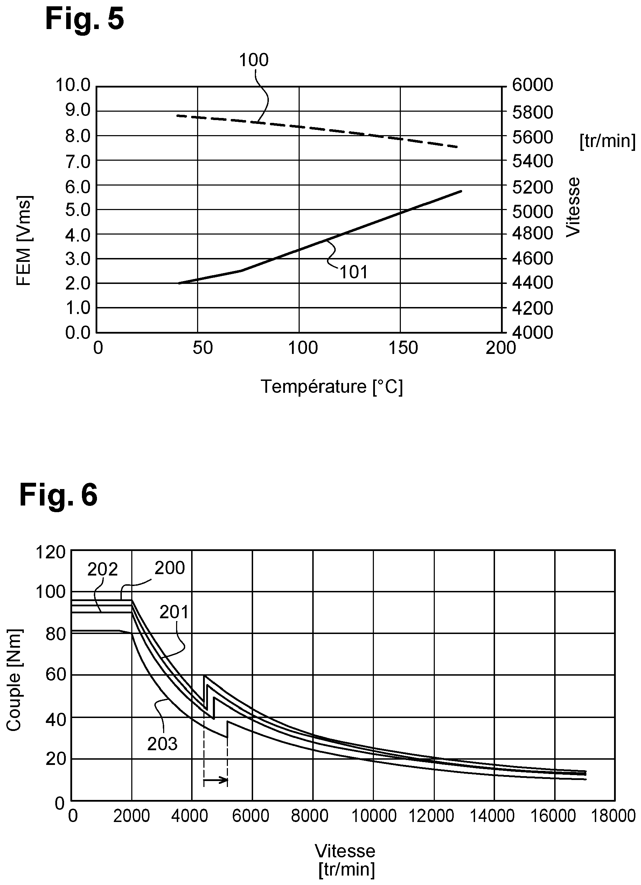

Comme on peut le voir sur la figure 5, sur laquelle la courbe 100 représente l'évolution de $k_e(T_i,n_0)$ et sur laquelle la courbe 101 représente l'évolution de la première vitesse de base $n_{MLI\text{-}PO}(T_i)$, plus la température $T_i$ des aimants permanents augmente, plus $ke(T_i,n_0)$ diminue, ce qui augmente la valeur de la première vitesse de base.

La figure 6 représente, pour une tension sur la sortie continue 24 de **l'onduleur/redresseur** 20 égale à 52V, différentes caractéristiques couple/vitesse de la machine électrique tournante 7 différant par la température des aimants permanents du rotor et par la valeur de la première vitesse de base. Ainsi :

- la courbe 200 est la caractéristique lorsque la température des aimants permanents est égale à 40°C,
- la courbe 201 est la caractéristique lorsque la température des aimants permanents est égale à 70°C,
- la courbe 202 est la caractéristique lorsque la température des aimants permanents est égale à 105°C,
- la courbe 203 est la caractéristique lorsque la température des aimants permanents est égale à 180°C.

On constate que :

- pour la courbe 200, la valeur de la première vitesse de base est 4400 tr/min,
- pour la courbe 201, la valeur de la première vitesse de base est 4500 tr/min,
- pour la courbe 202, la valeur de la première vitesse de base est 4700 tr/min,
- pour la courbe 203, la valeur de la première vitesse de base est 5150 tr/min,

On constate ainsi que la valeur de la première vitesse de base, qui correspond au passage de la commande par modulation par largeur d'impulsion à la commande pleine onde, augmente avec la température des aimants permanents. On retarde ainsi le passage à la commande pleine onde, ce qui augmente le rendement de la machine en évitant le besoin de surfluxer la machine électrique tournante 7.

Les tableaux ci-dessous montrent un exemple d'amélioration pouvant être apportée par l'invention.

Ainsi, la partie de gauche de chacun des tableaux montre les performances de **l'ensemble** de propulsion formé par la machine électrique tournante 7 et **l'onduleur/redresseur** 20 quand la première vitesse de base est toujours égale à

celle déterminée pour une température d'aimants permanents au rotor de 70°C, tandis que la partie de droite de ces tableaux montre les performances du même ensemble de propulsion quand la première vitesse de base est déterminée selon ce qui a été exposé ci-dessus.

[Table 1]

| | | MLI | PO | | MLI | PO |
|---|---|---|---|---|---|---|
| Temperature aimant | °C | 105 | 105 | | 105 | 105 |
| Vitesse MLI-PO | rpm | 4500 | 4500 | | 4700 | 4700 |
| Couple | Nm | 5 | 5 | → | 5 | 5 |
| Courant | A_rms | 42 | 30 | | 49 | 22 |
| Pertes | W | 248 | 267 | | 281 | 247 |
| Pertes onduleur | W | 24 | 13 | | 32 | 8 |
| **Rendement** | % | **90** | **89** | | **89** | **91** |

[Table 2]

| | | MLI | PO | | MLI | PO |
|---|---|---|---|---|---|---|
| Temperature aimant | °C | 180 | 180 | | 180 | 180 |
| Vitesse MLI-PO | rpm | 4500 | 4500 | | 5150 | 5150 |
| Couple | Nm | 5 | 5 | → | 5 | 5 |
| Courant | A_rms | 26 | 47 | | 41 | 23 |
| Pertes | W | 223 | 365 | | 273 | 262 |
| Pertes onduleur | W | 11 | 29 | | 23 | 9 |
| **Rendement** | % | **91** | **86** | | **90** | **91** |

L'invention n'est pas limitée à ce qui vient d'être décrit. C'est par exemple la valeur de la deuxième vitesse de base qui est déterminée à l'aide des équations précitées, et la valeur de la première vitesse de base s'obtient à partir de la valeur de la deuxième vitesse de base à laquelle est ajoutée ou retranchée une valeur constante sur toute la plage de fonctionnement de la machine.

## Revendications

**1.** Composant électronique (35) de commande d'un onduleur/redresseur (20) apte à être électriquement connecté à l'enroulement électrique de stator (10) d'une machine électrique tournante (7), cette machine électrique tournante (7) ayant notamment un rotor (12) à aimants permanents, notamment pour un véhicule, le composant (35) étant configuré pour appliquer sélectivement à cet onduleur/redresseur (20):

- une première commande étant une commande par modulation de largeur d'impulsion, et
- une deuxième commande étant une commande pleine onde,

le composant électronique (35) étant encore configuré pour :

- recevoir une information représentative de la température ($T_i$) des aimants permanents et l'une au moins : d'une information représentative de la valeur de la tension sur la sortie continue (24) de l'onduleur/redresseur (20) et d'une information représentative de la valeur de la tension sur la sortie alternative de **l'onduleur/redresseur** (20),
- déterminer la valeur d'une vitesse de base pour le passage entre la première commande et la deuxième commande en fonction de l'information représentative de la température ($T_i$) des aimants permanents du rotor et de l'une au moins de l'information représentative de la valeur de la tension sur la sortie continue (24) de l'onduleur/redresseur (20) et de l'information représentative de la valeur de la tension sur la sortie alternative de **l'onduleur/redresseur** (20), et
- appliquer l'une de la deuxième commande et de la première commande à la place de l'autre de la première commande et de la deuxième commande lorsque la valeur de la vitesse de base ainsi déterminée est atteinte.

**2.** Composant selon la revendication 1, dans lequel le composant est configuré pour :

- recevoir une information représentative de la température ($T_i$) des aimants permanents et une information représentative de la valeur de la tension sur la sortie continue (24) de l'onduleur/redresseur (20), et
- déterminer la valeur d'une vitesse de base pour le passage entre la première commande et la deuxième commande en fonction de l'information représentative de la température ($T_i$) des aimants permanents du rotor et de l'information représentative de la valeur de la tension sur la sortie continue (24) de l'onduleur/redresseur (20)

**3.** Composant électronique selon la revendication 1 ou 2, dans lequel le composant électronique (35) est configuré pour déterminer la valeur de la vitesse de base pour le passage entre la première commande et la deuxième commande à l'aide des équations suivantes :

$$\text{[Math 7]}\ n_{MLI-PO}(\mathrm{T_i}) = \frac{V_{DC} * \frac{\alpha}{\sqrt{2}}}{k_e(T_\mathrm{i}, n_0)} * n_0$$

et

$$\text{[Math 8]}\ k_e(T_i, n_0) = k_e(T_0, n_0)[1 + \beta(T_i - T_0)]$$

$\alpha$ étant le facteur de modulation de la tension dans la première commande,
$n_0$ étant une vitesse de rotation prédéfinie du rotor de la machine électrique,
$T_0$ étant une température prédéfinie des aimants du rotor,
$k_e(T_0,n_0)$ étant la valeur de la force électromotrice entre phases pour la vitesse $n_0$ et la température $T_0$, et
$\beta$ étant une constante de flux magnétique des aimants permanents au rotor en fonction de leur température.

**4.** Composant selon la revendication précédente, $T_0$ étant comprise entre 50°C et 100°C, étant par exemple égale à 70°C, et $n_0$ étant comprise entre 800 tr/min et 1200 tr/min, étant par exemple égale à 1000 tr/min.

**5.** Ensemble de propulsion d'un véhicule électrique ou hybride, comprenant :

- une machine électrique tournante (7) comprenant un stator (10) et un rotor (12) à aimants permanents,
- un onduleur/redresseur (20) connecté électriquement à l'enroulement électrique de stator et apte à être connecté au réseau de bord du véhicule, et
- le composant électronique (35) selon l'une quelconque des revendications précédentes.

**6.** Ensemble selon la revendication 5, comprenant encore au moins un capteur de température permettant de fournir l'information représentative de la température ($T_i$) des aimants au composant électronique (35).

**7.** Ensemble selon la revendication 5, comprenant un estimateur permettant de fournir l'information représentative de la température ($T_i$) des aimants au composant électronique (35).

**8.** Ensemble selon l'une quelconque des revendications 5 à 7, la machine électrique (7) tournante ayant une tension nominale de 48V.

**9.** Groupe motopropulseur (1) de véhicule hybride ou électrique, comprenant :

- l'ensemble selon l'une quelconque des revendications 5 à 8,
- une boîte de vitesses (4), comprenant des pignons, définissant des rapports de boîte, et
- un essieu avant et un essieu arrière,

l'arbre de la machine électrique tournante (7) étant solidaire en rotation :

- d'un arbre d'entrée de la boîte de vitesses, ou
- de l'arbre de sortie de la boîte de vitesses, ou

- de pignons fous de la boîte de vitesses, ou
- de l'essieu avant ou de l'essieu arrière.

**10.** Groupe motopropulseur (1) selon la revendication 9, comprenant un double embrayage (6), à sec ou humide, chacun des arbres de sortie (2, 3) du double embrayage (6) formant alors un arbre d'entrée pour la boîte de vitesses (4).

**11.** Procédé de commande d'un onduleur/redresseur (20) électriquement connecté à l'enroulement électrique de stator (10) d'une machine électrique tournante (7) ayant un rotor (12) à aimants permanents, notamment pour un véhicule, cette commande comprenant :

- une première commande étant une commande par modulation de largeur d'impulsion, et
- une deuxième commande étant une commande pleine onde,

procédé comprenant les étapes suivantes:

- recevoir une information représentative de la température ($T_i$) des aimants permanents et l'une au moins d'une information représentative de la valeur de la tension sur la sortie continue (24) de l'onduleur/redresseur (20), et d'une information représentative de la valeur de la tension sur la sortie alternative de **l'onduleur/redresseur** (20),
- déterminer la valeur d'une vitesse de base pour le passage entre la première commande et la deuxième commande en fonction de l'information représentative de la température ($T_i$) des aimants permanents du rotor et de l'une au moins de l'information représentative de la valeur de la tension sur la sortie continue (24) de l'onduleur/redresseur (20) et de l'information représentative de la valeur de la tension sur la sortie alternative de **l'onduleur/redresseur** (20), et
- appliquer l'une de la deuxième commande et de la première commande à la place de l'autre de la première commande et de la deuxième commande lorsque la valeur de la vitesse de base ainsi déterminée est atteinte.

## Patentansprüche

**1.** Elektronisches Bauteil (35) zur Steuerung eines Wechselrichters/Gleichrichters (20), der geeignet ist, elektrisch mit der elektrischen Statorwicklung (10) einer rotierenden elektrischen Maschine (7) verbunden zu werden, wobei diese rotierende elektrische Maschine (7) insbesondere einen Rotor (12) mit Permanentmagneten aufweist, insbesondere für ein Fahrzeug, wobei das Bauteil (35) konfiguriert ist, um selektiv auf diesen Wechselrichter/Gleichrichter (20) Folgendes anzuwenden:

- eine erste Steuerung, die eine Pulsweitenmodulationssteuerung ist, und
- eine zweite Steuerung, die eine Vollwellensteuerung ist,

wobei das elektronische Bauteil (35) ferner konfiguriert ist, um:

- eine Information zu empfangen, die repräsentativ für die Temperatur ($T_i$) der Permanentmagnete ist, und mindestens eine von: einer Information, die repräsentativ für den Wert der Spannung am Gleichstromausgang (24) des Wechselrichters/Gleichrichters (20) ist, und einer Information, die repräsentativ für den Wert der Spannung am Wechselstromausgang des Wechselrichters/Gleichrichters (20) ist,
- den Wert einer Basisdrehzahl für den Übergang zwischen der ersten Steuerung und der zweiten Steuerung in Abhängigkeit von der Information, die repräsentativ für die Temperatur ($T_i$) der Permanentmagnete des Rotors ist, und von mindestens einer der Information, die repräsentativ für den Wert der Spannung am Gleichstromausgang (24) des Wechselrichters/Gleichrichters (20) ist, und der Information, die repräsentativ für den Wert der Spannung am Wechselstromausgang des Wechselrichters/Gleichrichters (20) ist, zu bestimmen, und
- eine der zweiten Steuerung und der ersten Steuerung anstelle der anderen der ersten Steuerung und der zweiten Steuerung anzuwenden, wenn der so bestimmte Wert der Basisdrehzahl erreicht ist.

**2.** Bauteil nach Anspruch 1, wobei das Bauteil konfiguriert ist, um:

- eine Information zu empfangen, die repräsentativ für die Temperatur ($T_i$) der Permanentmagnete ist, und eine Information, die repräsentativ für den Wert der Spannung am Gleichstromausgang (24) des Wechselrichters/Gleichrichters (20) ist, und

- den Wert einer Basisdrehzahl für den Übergang zwischen der ersten Steuerung und der zweiten Steuerung in Abhängigkeit von der Information, die repräsentativ für die Temperatur ($T_i$) der Permanentmagnete des Rotors ist, und der Information, die repräsentativ für den Wert der Spannung am Gleichstromausgang (24) des Wechselrichters/Gleichrichters (20) ist, zu bestimmen.

**3.** Elektronisches Bauteil nach Anspruch 1 oder 2, wobei das elektronische Bauteil (35) konfiguriert ist, um den Wert der Basisdrehzahl für den Übergang zwischen der ersten Steuerung und der zweiten Steuerung mithilfe der folgenden Gleichungen zu bestimmen:

$$\text{[Math 7]}\ n_{MLI} \quad (\mathrm{T_i}) = \frac{V_{DC}*\frac{\alpha}{\sqrt{2}}}{k_e(T_\mathrm{i},n_0)} * n_0$$

und

$$\text{[Math 8]}\ k_e(T_i\,, n_0) = k_e(T_0, n_0)[1 + \beta(T_i - T_0)]$$

$\alpha$ der Spannungsmodulationsfaktor in der ersten Steuerung ist,
$n_0$ eine vordefinierte Drehzahl des Rotors der elektrischen Maschine ist,
$T_0$ eine vordefinierte Temperatur der Magnete des Rotors ist,
$k_e(T_0,n_0)$ der Wert der elektromotorischen Kraft zwischen den Phasen für die Drehzahl $n_0$ und die Temperatur $T_0$ ist, und
$\beta$ eine Magnetflusskonstante der Permanentmagnete am Rotor in Abhängigkeit von ihrer Temperatur ist.

**4.** Bauteil nach dem vorhergehenden Anspruch, wobei $T_0$ zwischen 50°C und 100°C liegt, beispielsweise gleich 70°C ist, und $n_0$ zwischen 800 U/min und 1200 U/min liegt, beispielsweise gleich 1000 U/min ist.

**5.** Antriebsanordnung eines elektrischen oder hybriden Fahrzeugs, umfassend:

- eine rotierende elektrische Maschine (7), die einen Stator (10) und einen Rotor (12) mit Permanentmagneten umfasst,
- einen Wechselrichter/Gleichrichter (20), der elektrisch mit der elektrischen Statorwicklung verbunden und geeignet ist, mit dem Bordnetz des Fahrzeugs verbunden zu werden, und
- das elektronische Bauteil (35) nach einem der vorhergehenden Ansprüche.

**6.** Anordnung nach Anspruch 5, ferner umfassend mindestens einen Temperatursensor zum Bereitstellen der Information, die repräsentativ für die Temperatur ($T_i$) der Magnete ist, an das elektronische Bauteil (35).

**7.** Anordnung nach Anspruch 5, umfassend einen Schätzer zum Bereitstellen der Information, die repräsentativ für die Temperatur ($T_i$) der Magnete ist, an das elektronische Bauteil (35).

**8.** Anordnung nach einem der Ansprüche 5 bis 7, wobei die rotierende elektrische Maschine (7) eine Nennspannung von 48V aufweist.

**9.** Antriebsstrang (1) für ein hybrides oder elektrisches Fahrzeug, umfassend:

- die Anordnung nach einem der Ansprüche 5 bis 8,
- ein Getriebe (4), das Zahnräder umfasst, die Gangschaltverhältnisse definieren, und
- eine Vorderachse und eine Hinterachse,

wobei die Welle der rotierenden elektrischen Maschine (7) drehfest verbunden ist mit:

- einer Eingangswelle des Getriebes, oder
- der Ausgangswelle des Getriebes, oder
- Losrädern des Getriebes, oder
- der Vorderachse oder der Hinterachse.

**10.** Antriebsstrang (1) nach Anspruch 9, umfassend eine Doppelkupplung (6), trocken oder nass, wobei jede der Ausgangswellen (2, 3) der Doppelkupplung (6) dann eine Eingangswelle für das Getriebe (4) bildet.

**11.** Verfahren zur Steuerung eines Wechselrichters/Gleichrichters (20), der elektrisch mit der elektrischen Statorwicklung (10) einer rotierenden elektrischen Maschine (7) mit einem Rotor (12) mit Permanentmagneten verbunden ist, insbesondere für ein... Fahrzeug, wobei diese Steuerung umfasst:

- eine erste Steuerung, die eine Pulsweitenmodulationssteuerung ist, und
- eine zweite Steuerung, die eine Vollwellensteuerung ist,

wobei das Verfahren die folgenden Schritte umfasst:

- Empfangen einer Information, die repräsentativ für die Temperatur ($T_i$) der Permanentmagnete ist, und mindestens einer von einer Information, die repräsentativ für den Wert der Spannung am Gleichstromausgang (24) des Wechselrichters/Gleichrichters (20) ist, und einer Information, die repräsentativ für den Wert der Spannung am Wechselstromausgang des Wechselrichters/Gleichrichters (20) ist,
- Bestimmen des Wertes einer Basisdrehzahl für den Übergang zwischen der ersten Steuerung und der zweiten Steuerung in Abhängigkeit von der Information, die repräsentativ für die Temperatur ($T_i$) der Permanentmagnete des Rotors ist, und von mindestens einer der Information, die repräsentativ für den Wert der Spannung am Gleichstromausgang (24) des Wechselrichters/Gleichrichters (20) ist, und der Information, die repräsentativ für den Wert der Spannung am Wechselstromausgang des Wechselrichters/Gleichrichters (20) ist, und
- Anwenden einer der zweiten Steuerung und der ersten Steuerung anstelle der anderen der ersten Steuerung und der zweiten Steuerung, wenn der so bestimmte Wert der Basisdrehzahl erreicht ist.

## Claims

**1.** An electronic component (35) for controlling an inverter/rectifier (20) adapted to be electrically connected to the stator electrical winding (10) of a rotating electrical machine (7), said rotating electrical machine (7) notably having a permanent magnet rotor (12), notably for a vehicle, the component (35) being configured to selectively apply to said inverter/rectifier (20):

- a first command being a pulse width modulation command, and
- a second command being a full-wave command,

the electronic component (35) being further configured to:

- receive information representative of the temperature ($T_i$) of the permanent magnets and at least one of: information representative of the voltage value on the DC output (24) of the inverter/rectifier (20) and information representative of the voltage value on the AC output of the inverter/rectifier (20),
- determine the value of a base speed for switching between the first command and the second command as a function of the information representative of the temperature (Ti) of the rotor permanent magnets and of at least one of the information representative of the voltage value on the DC output (24) of the inverter/rectifier (20) and the information representative of the voltage value on the AC output of the inverter/rectifier (20), and
- apply one of the second command and the first command instead of the other of the first command and the second command when the value of the base speed thus determined is reached.

**2.** The component according to claim 1, wherein the component is configured to:

- receive information representative of the temperature ($T_i$) of the permanent magnets and information representative of the voltage value on the DC output (24) of the inverter/rectifier (20), and
- determine the value of a base speed for switching between the first command and the second command as a function of the information representative of the temperature ($T_i$) of the rotor permanent magnets and the information representative of the voltage value on the DC output (24) of the inverter/rectifier (20).

**3.** The electronic component according to claim 1 or 2, wherein the electronic component (35) is configured to determine the value of the base speed for switching between the first command and the second command using the following equations:

$$[\text{Math 7}]\ n_{MLI-PO}(\mathrm{T_i}) = \frac{V_{DC} * \frac{\alpha}{\sqrt{2}}}{k_e(T_\mathrm{i}, n_0)} * n_0$$

and

$$[\text{Math 8}]\ k_e(T_i, n_0) = k_e(T_0, n_0)[1 + \beta(T_i - T_0)]$$

$\alpha$ being the voltage modulation factor in the first command,
$n_0$ being a predefined rotation speed of the rotor of the electrical machine,
$T_0$ being a predefined temperature of the rotor magnets,
$k_e(T_0,n_0)$ being the phase-to-phase electromotive force value for the speed $n_0$ and the temperature $T_0$, and
$\beta$ being a magnetic flux constant of the permanent magnets at the rotor as a function of their temperature.

**4.** The component according to the preceding claim, $T_0$ being between 50°C and 100°C, being for example equal to 70°C, and $n_0$ being between 800 rpm and 1200 rpm, being for example equal to 1000 rpm.

**5.** A propulsion system for an electric or hybrid vehicle, comprising:

- a rotating electrical machine (7) comprising a stator (10) and a permanent magnet rotor (12),
- an inverter/rectifier (20) electrically connected to the stator electrical winding and adapted to be connected to the vehicle onboard network, and
- the electronic component (35) according to any one of the preceding claims.

**6.** The system according to claim 5, further comprising at least one temperature sensor for providing information representative of the temperature ($T_i$) of the magnets to the electronic component (35).

**7.** The system according to claim 5, comprising an estimator for providing information representative of the temperature (Ti) of the magnets to the electronic component (35).

**8.** The system according to any one of claims 5 to 7, the rotating electrical machine (7) having a nominal voltage of 48V.

**9.** A powertrain (1) for a hybrid or electric vehicle, comprising:

- the system according to any one of claims 5 to 8,
- a gearbox (4), comprising gears, defining gear ratios, and
- a front axle and a rear axle,

the shaft of the rotating electrical machine (7) being rotationally fixed to:

- an input shaft of the gearbox, or
- the output shaft of the gearbox, or
- idle gears of the gearbox, or
- the front axle or the rear axle.

**10.** The powertrain (1) according to claim 9, comprising a double clutch (6), dry or wet, each of the output shafts (2, 3) of the double clutch (6) then forming an input shaft for the gearbox (4).

**11.** A method for controlling an inverter/rectifier (20) electrically connected to the stator electrical winding (10) of a rotating electrical machine (7) having a permanent magnet rotor (12), notably for a vehicle, said control comprising:

- a first command being a pulse width modulation command, and
- a second command being a full-wave command,

the method comprising the following steps:

- receiving information representative of the temperature ($T_i$) of the permanent magnets and at least one of

information representative of the voltage value on the DC output (24) of the inverter/rectifier (20), and information representative of the voltage value on the AC output of the inverter/rectifier (20),
- determining the value of a base speed for switching between the first command and the second command as a function of the information representative of the temperature (Ti) of the rotor permanent magnets and of at least one of the information representative of the voltage value on the DC output (24) of the inverter/rectifier (20) and the information representative of the voltage value on the AC output of the inverter/rectifier (20), and
- applying one of the second command and the first command instead of the other of the first command and the second command when the value of the base speed thus determined is reached.

Fig. 1

1
4
6
2
3
...Rn
R4
R2
8
R1
R3
R5
-7-

Fig. 2

13
(X)
16
12
10
15
17

Fig. 3

Fig. 4

27
23
12V
48V
24
34
25
20
10
22
30
21
33
32
35

# Fig. 5

100
101
10.0
9.0
8.0
7.0
6.0
5.0
4.0
3.0
2.0
1.0
0.0
FEM [Vms]
6000
5800
5600
5400
5200
5000
4800
4600
4400
4200
4000
[tr/min]
Vitesse
0
50
100
150
200
Température [°C]


# Fig. 6

202
200
201
203
120
100
80
60
40
20
0
Couple [Nm]
0
2000
4000
6000
8000
10000
12000
14000
16000
18000
Vitesse
[tr/min]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2013090551 A
- US 20100072925 A
- US 2010012408 A1
- EP 3361624 A1